# EUROPEAN PATENT APPLICATION

(11) **EP 2 559 968 A1**
(43) Date of publication of application: **20.02.2013**
(21) Application number: 11849433.5
(22) Date of filing: 01.12.2011
(51) Int. Cl.: G01C 21/26, G09B 29/00, G09B 29/10

(54) **NAVIGATION DEVICE**

(30) Priority: 15.12.2010 JP 2010278845
(71) Applicant: JVC KENWOOD Corporation, Kanagawa 221-0022 (JP)
(72) Inventor: SASAKI, Jun, Yokohama-shi, Kanagawa 221-0022 (JP); MAKI, Yasunori, Yokohama-shi, Kanagawa 221-0022 (JP); OGAWARA, Masaru, Yokohama-shi, Kanagawa 221-0022 (JP); NISHIGUCHI, Kaoru, Yokohama-shi, Kanagawa 221-0022 (JP)
(74) Representative: Wagner & Geyer
(86) International application number: PCT/JP2011/077828
(87) International publication number: WO 2012/081414

(57) **Abstract**

A navigation device according to the present invention includes a storage unit (12), which stores map information, a position detecting unit (13), which detects a position of a moving body, a controller (10), which generates drawing data where the map information stored in the storage unit (12) and the position of the moving body are superimposed, and a display unit (17), which includes a plurality of backlights, and displays the drawing data generated at the controller (10) with a screen irradiated by the backlights. The controller (10) controls the plurality of the backlights such that luminance of backlights that are arranged to irradiate a second region 42 that is other region than a first region are lower than luminance of backlights that are arranged to irradiate the first region corresponding to a traveling direction of the moving body.

## Description

### Field

The present invention relates to a navigation device. In particular, the present invention relates to a navigation device that includes a display unit with a backlight.

### Background

A navigation device is installed on a moving body such as a car and receives a signal transmitted from a GPS (Global Positioning System) satellite to detect a current position of the moving body. Then, the current position of the moving body is displayed along with map information stored in the navigation device. Thus, a user can recognize the current position of the moving body. When the user sets a destination, the navigation device searches an optimum route between the present location of the moving body and the set destination. Then, the navigation device displays the route on the map, thus guiding the user to the destination.

Patent Literature 1 discloses a technique that uses a display screen of the navigation device in a fan shape that expands from a current position of a moving body as the center to the destination direction. The display screen thus configured improves visibility of the current position of the moving body, the destination, and the like.

In the conventional navigation device, the display screen employs, for example, a liquid crystal display unit having a backlight. Then, the backlight is controlled such that the whole display screen has uniform luminance in the case where the display screen displays a current position of a moving body and map information. However, displaying images on the whole display screen with uniform luminance increases the number of backlights that light up with high luminance thus problematically increasing power consumption.

### Citation List

### Patent Literature

Patent Literature 1: Japanese Unexamined Patent Application Publication No. 8-55298

### Summary

The present invention has been made in view of the above-described circumstances, and it is an object of the present invention to provide a navigation device that reduces power consumption.

According to an aspect of the present invention, a navigation device includes: a storage unit configured to store map information; a position detecting unit configured to detect a position of a moving body; a controller configured to generate drawing data, the map information stored in the storage unit and the position of the moving body being superimposed in the drawing data; and a display unit configured to display the drawing data on a screen, the display unit including a plurality of backlights, the backlights irradiating the screen, the drawing data being generated by the controller, and the controller is configured to control the plurality of the backlights such that luminance of a backlight that is arranged to irradiate a second region is lower than luminance of a backlight that is arranged to irradiate a first region, the first region corresponding to a traveling direction of the moving body, the second region being a region other than the first region.

According to another aspect of the present invention, the display unit includes a liquid crystal panel, and the controller is configured to control the liquid crystal panel such that transmittance of the liquid crystal panel in the first region is higher than transmittance of the liquid crystal panel in the second region.

According to still another aspect of the present invention, the first region is configured to change according to a scale of the map information displayed on the display unit.

According to still another aspect of the present invention, the first region is a region that is surrounded by a first line segment and a second line segment, the first line segment forming a first angle with the traveling direction of the moving body, the second line segment forming a second angle with the traveling direction of the moving body.

According to still another aspect of the present invention, the controller is configured to: make an angle formed by the first line segment and the second line segment smaller as a scale of a map to be displayed on the display unit becomes larger; and make the angle formed by the first line segment and the second line segment larger as a scale of a map to be displayed on the display unit becomes smaller.

According to still another aspect of the present invention, the first angle and the second angle are mutually different from each other.

According to still another aspect of the present invention, the first region is defined to include a searched route of the moving body.

According to still another aspect of the present invention, the controller is configured to control the plurality of the backlights such that luminance of a backlight that is arranged to irradiate a position not corresponding to a single road is lower than luminance of a backlight that is arranged to irradiate a position corresponding to the single road, in a case where the single road is displayed on the display unit, the single road having no branch road within a displayed map.

According to still another aspect of the present invention, the controller is configured to generate the drawing data such that a north direction of the map information is fixedly oriented to an upper direction on the display unit.

According to still another aspect of the present invention, the controller is configured to control the backlights such that luminance of a backlight that is arranged to irradiate a region corresponding to the moving body is higher than luminance of a backlight that is arranged to irradiate the second region.

The present invention provides the navigation device that reduces the power consumption.

### Brief Description of Drawings

FIG. 1 is a block diagram illustrating a navigation device according to a first embodiment.
FIG. 2A is a cross-sectional view of a display unit of the navigation device according to the first embodiment.
FIG. 2B is a diagram illustrating a backlight panel provided in the display unit of the navigation device according to the first embodiment.
FIG. 3 is a diagram illustrating an example of a first region and a second region in a display screen of the navigation device according to the first embodiment.
FIG. 4A is a diagram illustrating the display screen of the navigation device according to the first embodiment.
FIG. 4B is a diagram illustrating a backlight condition in the display screen illustrated in FIG. 4A.
FIG. 5A is a diagram illustrating a display screen of a navigation device according to a second embodiment.
FIG. 5B is a diagram illustrating the display screen of the navigation device according to the second embodiment.
FIG. 5C is a diagram illustrating the display screen of the navigation device according to the second embodiment.
FIG. 6A is a diagram illustrating a specific display example of the navigation device according to the second embodiment.
FIG. 6B is a diagram illustrating a specific display example of the navigation device according to the second embodiment.
FIG. 6C is a diagram illustrating a specific display example of the navigation device according to the second embodiment.
FIG. 7A is a diagram illustrating a display screen of a navigation device according to a third embodiment.
FIG. 7B is a diagram illustrating a specific display example of the navigation device according to the third embodiment.
FIG. 8A is a diagram illustrating the display screen in the case where a route extends in a wide area on the display screen of the navigation device according to the third embodiment.
FIG. 8B is a diagram illustrating the display screen in the case where a route is in a narrow area on the display screen of the navigation device according to the third embodiment.
FIG. 9A is a diagram illustrating the display screen of the navigation device according to the third embodiment.
FIG. 9B is a diagram illustrating the display screen of the navigation device according to the third embodiment.
FIG. 9C is a diagram illustrating the display screen of the navigation device according to the third embodiment.
FIG. 10A is a diagram illustrating a specific display example of the navigation device according to the third embodiment.
FIG. 10B is a diagram illustrating a specific display example of the navigation device according to the third embodiment.
FIG. 10C is a diagram illustrating a specific display example of the navigation device according to the third embodiment.
FIG. 11A is a diagram illustrating a display screen of a navigation device according to a fourth embodiment.
FIG. 11B is a diagram illustrating a specific display example of the navigation device according to the fourth embodiment.
FIG. 12A is a diagram illustrating a display screen of a navigation device according to a fifth embodiment.
FIG. 12B is a diagram illustrating a specific display example of the navigation device according to the fifth embodiment.
FIG. 13A is a diagram illustrating an exemplary display screen on which a north-up map is displayed during normal running in a navigation device according to a sixth embodiment.
FIG. 13B is a diagram illustrating an exemplary display screen on which a north-up map is displayed and a single road runs during normal running in the navigation device according to the sixth embodiment.
FIG. 14A is a diagram illustrating a display screen of a general navigation device.
FIG. 14B is a diagram illustrating a specific display example of the general navigation device.

### Description of Embodiments

Each embodiment of the present invention will be described below with reference to the drawings.

### First Embodiment

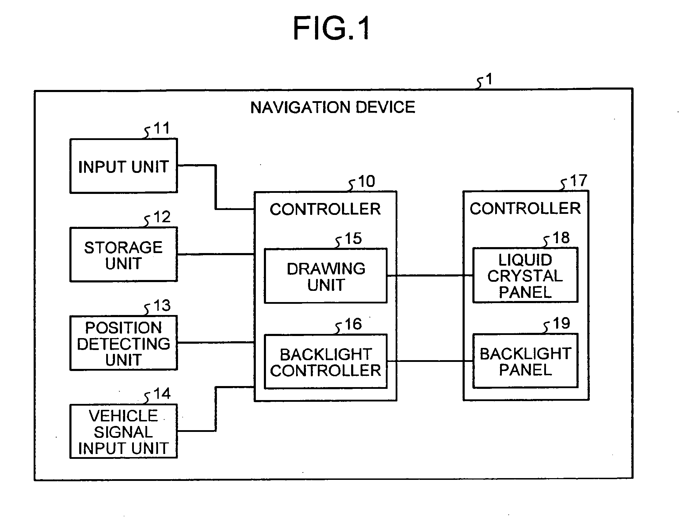

FIG. 1 is a block diagram illustrating a navigation device according to a first embodiment. As illustrated in FIG. 1, a navigation device 1 according to this embodiment includes an input unit 11, a storage unit 12, a position detecting unit 13, a vehicle signal input unit 14, a controller 10, and a display unit 17. The controller 10 includes a drawing unit 15 and a backlight controller 16. The display unit 17 includes a liquid crystal panel 18 and a backlight panel 19.

In the embodiment described below, a car navigation device that is installed on a car will be described as an exemplary navigation device. However, the present invention is not limited to the car navigation device. For example, the present invention may be applied to a navigation device that is installed on other moving bodies such as a ship and an aircraft and a navigation device that can be carried and used by human. The navigation device may be a mobile phone, a computer terminal, a portable information terminal, or the like, which include a navigation function.

The input unit 11 includes input switches for a user to perform various input operations so as to make the navigation device 1 work. By operating the input unit 11, the user for example can: input a name or the like of a facility or a point desired to be set as a destination; select a destination among from registered locations that are registered in advance; and scroll a map in an arbitrary direction. The input unit 11 may be constituted using an operation panel, a remote controller, and the like. The input unit 11 may be a touch panel constituted by integrating the input unit 11 with the display unit 17.

The storage unit 12 includes a recording medium in which map information and a control program are stored. A non-volatile recording medium such as a hard disk drive, a flash memory, and the like may be used as the recording medium. The map information and the control program that are stored in the storage unit 12 are read out by the controller 10 as necessary, and then used in various kinds of processing and control, which are executed by the controller 10.

The map information includes route calculation data, road data, and background data. The route calculation data is data used, for example, when searching a route to a destination. The road data is data indicative of a shape, a type, and the like of a road. In the map information, a minimum unit of each road is referred to as a link. That is, in the map information, each road includes a plurality of links. The links adjacent to one another are coupled together via a point, which is referred to as a node. The node indicates respective end points of the links. In the middle of the link, a point referred to as a shape interpolation point may be set to indicate a shape of the link. The background data is data that indicates a background of the map. The background of the map indicates various constituents other than roads on the map. For example, rivers, railways, green belts, and various structures are indicated by the background data.

The position detecting unit 13 includes a sensor that detects an angular speed of the own vehicle (which is also referred to as a moving body) and an antenna that receives a GPS signal, which is transmitted from a GPS satellite. The angular speed of the own vehicle detected by the sensor and the GPS signal received by the antenna are output to the controller 10. The GPS signal includes information related to a position of the GPS satellite that has transmitted the GPS signal and its transmission time for obtaining a position of the own vehicle and current time. Accordingly, current position of the own vehicle and the current time can be calculated based on these pieces of information by receiving GPS signals from equal to or more than the predetermined number of GPS satellites.

The vehicle signal input unit 14 includes sensors that detect vehicle speed of the own vehicle. By detecting a motion state of the own vehicle at a predetermined time interval using a sensor to detect angular speed of the own vehicle and a sensor to detect vehicle speed of the own vehicle, a movement amount of the own vehicle is obtained and the current position of the own vehicle is detected.
In other words, the current position of the own vehicle is detected by the position detecting unit 13 and the vehicle signal input unit 14.

The controller 10 receives respective signals from the input unit 11, the storage unit 12, the position detecting unit 13, and the vehicle signal input unit 14, thus executing various kinds of processing. The controller 10 includes, for example, a microprocessor, various peripheral circuits, a RAM, and a ROM. For example, the controller 10 executes processing for generating drawing data based on a control program and map information, which are stored in the storage unit 12. The controller 10 executes processing for guiding the own vehicle to a destination. The processing includes, for example, processing for searching a destination when setting a destination, processing for searching a route to the set destination, processing for detecting a current position of the own vehicle, various kinds of image display processing, and processing for voice output in route guidance.

The controller 10 includes the drawing unit 15. The drawing unit 15 executes processing for adapting the drawing data, which is generated in the controller 10, to a display device used in the display unit 17. For example, when the display device used in the display unit 17 is a liquid crystal panel, the drawing unit 15 functions as a liquid crystal driver to drive the liquid crystal panel based on drawing data. While in this embodiment, the drawing unit 15 is included in the controller 10, the drawing unit 15 may be provided separately from the controller 10.

The controller 10 includes the backlight controller 16. The backlight controller 16 controls luminance of respective backlights of the backlight panel 19, which are provided in the display unit 17. While in this embodiment, the backlight controller 16 is included in the controller 10, the backlight controller 16 may be provided separately from the controller 10.

The display unit 17 is a device for performing various screen displays in the navigation device 1. For example, the display unit 17 is constituted by a liquid crystal display that includes the liquid crystal panel 18 and the backlight panel 19. The display unit 17 is installed in a position that is easily viewable by the user such as on a dashboard and in an instrument panel of the own vehicle.

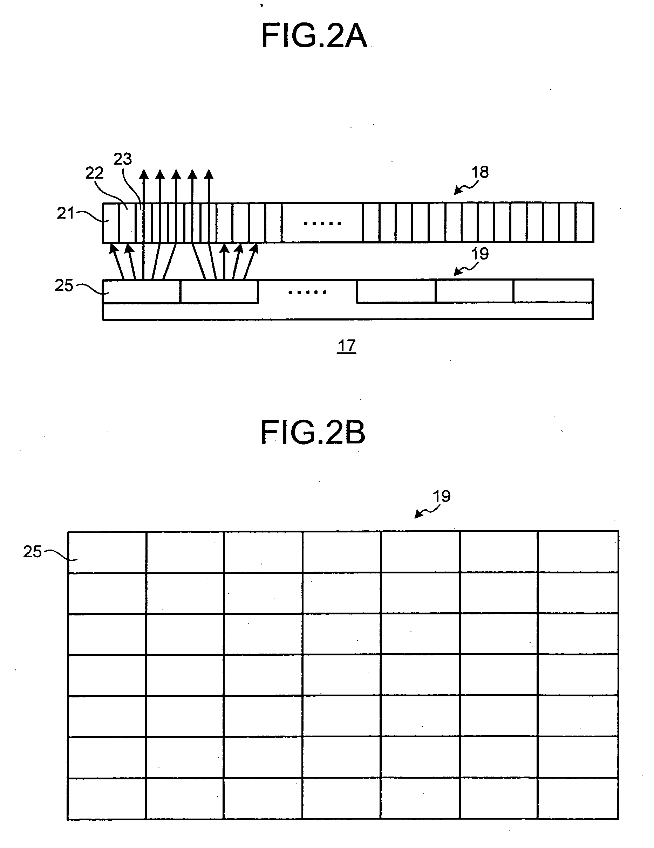

FIG. 2A is a cross-sectional view of the display unit 17 of the navigation device according to this embodiment. As illustrated in FIG. 2A, the display unit 17 is arranged such that the liquid crystal panel 18 is superimposed on the backlight panel 19. The liquid crystal panel 18 includes a plurality of liquid crystal cells 21. The transmittance of the plurality of the liquid crystal cells 21 can be independently controlled using the drawing unit 15 illustrated in FIG. 1. The backlight panel 19 includes a plurality of backlights 25. Each backlight 25 may include, for example, a light-emitting diode (LED) and a light guiding unit that guides light emitted from the light-emitting diode to a surface of the backlight panel 19. Each backlight 25 may include an organic EL element or an inorganic EL element. FIG. 2B is a diagram illustrating an example of the backlight panel 19 where the plurality of the backlights 25 are arranged. The luminance of the respective backlights 25 illustrated in FIG. 2B may be independently controlled by the backlight controller 16 illustrated in FIG. 1.

As illustrated in FIG. 2A, in this embodiment, one backlight 25 is arranged for every predetermined number of the liquid crystal cells 21. Each one of the backlights 25 functions as a light source for the predetermined number of the liquid crystal cells 21. The amount of light (luminance), emitted from the backlight 25 reaching surfaces of the liquid crystal cells 21 can be adjusted by controlling transmittance of the respective liquid crystal cells 21. In the example illustrated in FIG. 2A, a liquid crystal cell 22 blocks light emitted from the backlight 25, while a liquid crystal cell 23 transmits light emitted from the backlight 25. The number of the backlights 25 may arbitrarily be determined.

Next, an operation of the navigation device according to this embodiment will be described. When the user operates the input unit 11 to set a destination, the controller 10 of the navigation device 1 executes arithmetic operations of a predetermined algorithm based on the route calculation data assuming that the current position of the own vehicle is the departure point and executes a route search from the departure point to the destination. A route obtained with this route search (a searched route) is set as a route to the destination. When the route is set, the controller 10 displays the route on the display unit 17 using a different color from that of other roads so that the user can view the recommended route. The navigation device 1 may guide the own vehicle by giving instructions of a traveling direction to the user using images, voice, and the like, so that the own vehicle travels in accordance with the route. In this manner, the route guidance to the destination is performed.

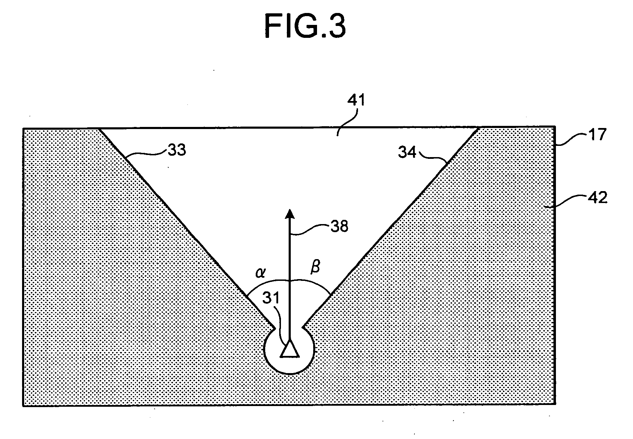

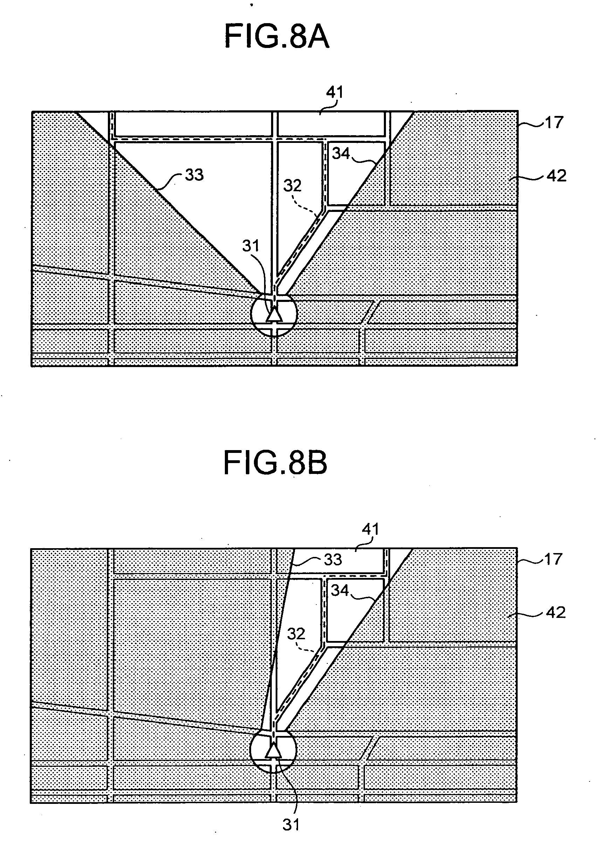

The controller 10 defines a first region and a second region based on the traveling direction of the own vehicle. The first region corresponds to the traveling direction of the own vehicle. The second region is a region other than the first region. FIG. 3 is a diagram illustrating an example of a first region 41 and a second region 42 in the display unit (a display screen) 17 of the navigation device according to this embodiment. As illustrated in FIG. 3, the first region 41 is assumed to be a region surrounded by a first line segment 33 at a predetermined angle α to a traveling direction 38 of a own vehicle 31 and a second line segment 34 at a predetermined angle β to the traveling direction 38. In this case, the first region 41 may include the own vehicle 31. The second region 42 may be assumed to be a region other than the first region 41 on the display screen. Here, values of the angle α and the angle β may be arbitrarily determined. That is, values of the angle α and the angle β may be mutually the same or different. Values of the angle α and the angle β may be a negative value (see, for example, the first line segment 33 in FIG. 8B).

The first line segment 33 and the second line segment 34, which define the first region 41 and the second region 42, may be, for example, curved lines. Shapes of the first region 41 and the second region 42 may be arbitrarily determined. That is, in this embodiment, any region is possible as the first region 41 insofar as the first region 41 corresponds to at least the traveling direction of the own vehicle 31, and the shape of the first region 41 may be arbitrarily determined insofar as the above described condition is satisfied.

Then, after the controller 10 defines the first region 41 and the second region 42, the backlight controller 16 controls the plurality of the backlights such that luminance of the backlights arranged to irradiate the second region 42 are lower than luminance of the backlights arranged to irradiate the first region 41. For example, the luminance of the backlights arranged to irradiate the second region 42 may be low but enough to recognize the map, or may be low (including turned off) not enough to recognize the map. In this case, power consumption of the navigation device is further reduced when the luminance of the backlight are low not enough to recognize the map. For example, the luminance of the backlights for the second region 42 may be arbitrarily set by the user.

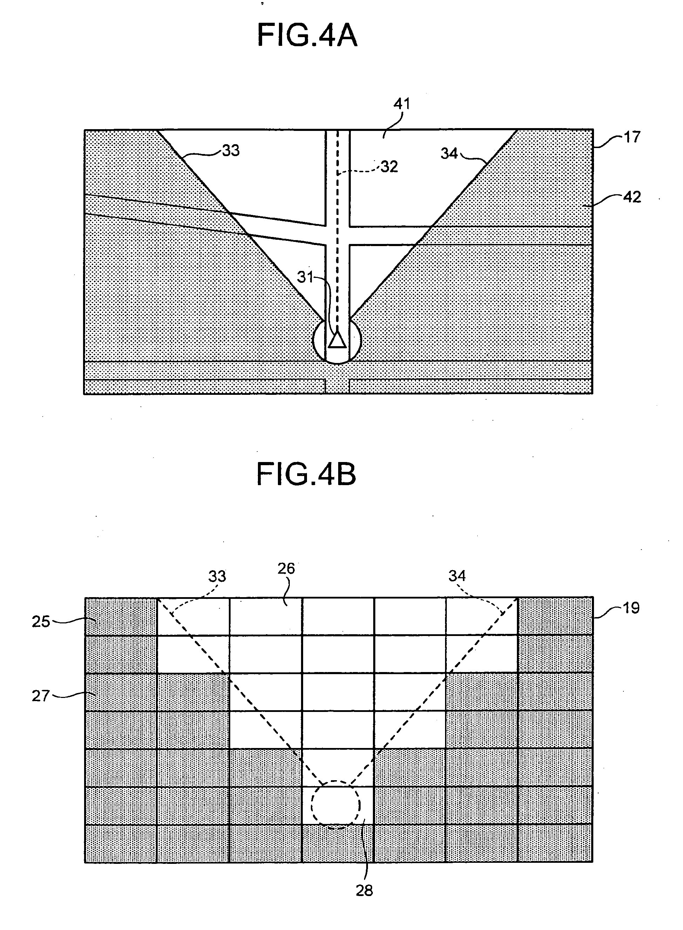

FIG. 4A is a diagram illustrating the display screen of the navigation device according to this embodiment. FIG. 4B is a diagram illustrating a backlight condition in the display screen illustrated in FIG. 4A. As illustrated in FIG. 4A, after the first region 41 and the second region 42 are defined, the backlight controller 16 controls the plurality of the backlights such that the first region 41 corresponding to the traveling direction (a route 32) is brighter than the second region 42. Specifically, as illustrated in FIG. 4B, the backlight controller 16 controls the backlights such that backlights 26, which are arranged to irradiate the first region 41 that is surrounded by the first line segment 33 and the second line segment 34, are brighter than backlights 27 (illustrated by hatching), which are arranged to irradiate the second region 42.

In the case where the number of the backlights in the backlight panel 19 is comparatively large, that is, in the case where a division unit of the backlights is comparatively small, simply controlling the backlights can clearly display a boundary between the first region 41 and the second region 42. For example, when the backlights employ an organic EL element, the backlights can be formed in division units similar to that of respective liquid crystal cells of the liquid crystal panel 18. In contrast, in the case where the number of the backlights in the backlight panel 19 is comparatively small, that is, in the case where the division unit of the backlights is comparatively large, simply controlling the backlights has difficulty in clearly displaying a boundary between the first region 41 and the second region 42.

In this case, the controller 10 can perform a control of the liquid crystal panel 18 in addition to a control of the backlights. That is, the drawing unit 15 of the controller 10 may control the liquid crystal panel 18 (that is, the respective liquid crystal cells) such that transmittance of the liquid crystal panel 18 in the first region 41 is higher than transmittance of the liquid crystal panel 18 in the second region 42. With this control, even in the case where the number of the backlights is comparatively small, the boundary between the first region 41 and the second region 42 can be clearly displayed.

In the case where the liquid crystal panel employs an edge light system in which light sources are arranged at a side of the liquid crystal panel, instead of arranging the light sources on the back side of the liquid crystal panel as described above, lighting of the backlights cannot be controlled for each of grid-like areas. In this case, control of lighting of the backlights may be performed on respective strip-shaped areas that are formed by the backlights arranged at the side of the liquid crystal panel. Specifically, the backlights are controlled such that strip parts that cross the fan-shaped area are lighted. At this time, simply lighting the strip parts can not display the fan-shaped area. Thus, the controller 10 controls the display unit 17 using a combination of control of the backlights and control of transmittance for the liquid crystal as described above.

It may be determined, based on the number of the backlights, whether the backlight panel 19 alone is controlled, or the liquid crystal panel 18 is controlled along with control of the backlight panel 19. As illustrated in FIGS. 4A and 4B, in the case where the traveling direction is displayed to be fixedly oriented to the upper direction, the backlights in a position that corresponds to the position of the own vehicle 31 may always be turned on. In this case, the own vehicle 31 is displayed in a position (a little bit above the division line of the backlight) of a backlight 28.

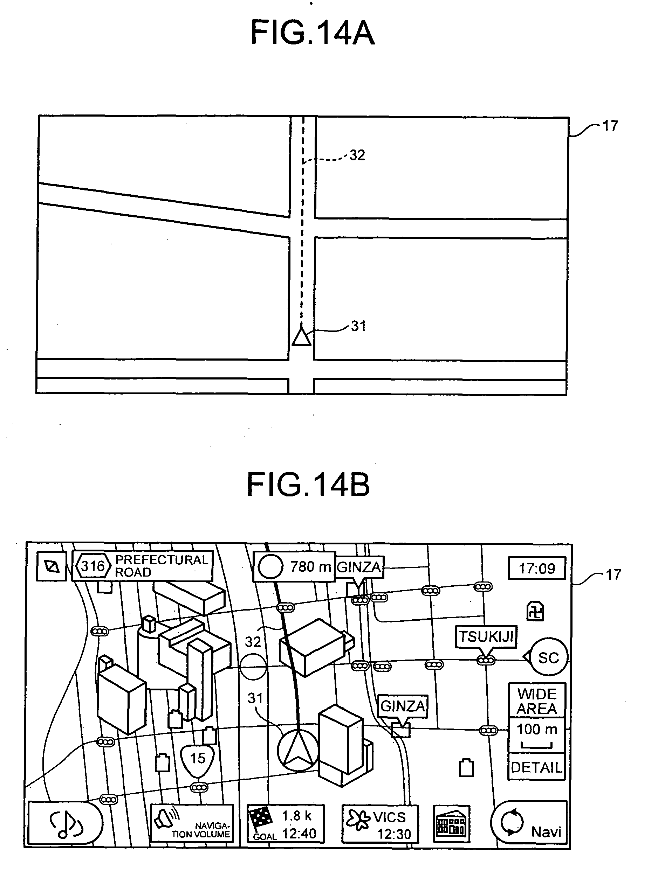

FIG. 14A is a diagram illustrating a display screen of a general navigation device. FIG. 14B is a diagram illustrating a specific display example of the general navigation device. As illustrated in FIGS. 14A and 14B, in the general navigation device, in the case where a current position of the own vehicle 31, the route 32, and 16 map information are displayed on the display screen, the backlight has been controlled such that the whole display screen has uniform luminance. This increases the number of backlights that light with high luminance and a problem arises in that this increases power consumption.

In contrast, in the navigation device according to this embodiment, the controller 10 controls the backlights 25 such that the luminance of the backlights that are arranged to irradiate the second region 42, which is other region than the first region 41, is lower than the luminance of the backlights that are arranged to irradiate the first region 41, which corresponds to the traveling direction of the own vehicle 31. Accordingly, this makes the backlights dim which irradiate the second region, which is less important and corresponds to other region than the traveling direction of the own vehicle 31. Thus, power consumption of the navigation device is reduced.

In the navigation device according to this embodiment, the controller 10 controls the plurality of the backlights such that the first region 41 corresponding to the traveling direction is brighter than the second region 42. Therefore, the traveling direction is clearly displayed on the display screen, thus the user can instantly recognize the position and the traveling direction of the own vehicle without carefully looking at the navigation device while driving. In addition, since this does not display less important information, visibility of the display screen in the navigation device is improved.

In the above description, an example of performing the above-described control of the backlights while performing the route guidance to the destination has been explained. However, the above-described control of the backlights may be performed when the route guidance is not provided, that is, during normal running. The user may arbitrarily decide a timing at which the above-described control of the backlights is performed.

The luminance of the first and the second regions may be changed in consideration of the ambient brightness (for example, day and night). For example, in the case where the display unit 17 includes a backlight that is divided into four (divided into four in the upper and lower direction), luminance of the backlight behind a position of the own vehicle may be reduced and the liquid crystal panel 18 may be controlled to dimly display the second region (in the case where the traveling direction is displayed to be fixedly oriented to the upper direction). While in the above description, the display is two-dimensional (a flat display), the present invention is also applicable to a three-dimensional display such as a bird's eye view.

In the above description, the navigation device according to this embodiment has been specifically described. The navigation device according to this embodiment provides the above effects insofar as the navigation device includes at least the following prerequisite. That is, the navigation device according to this embodiment may have any configuration insofar as the navigation device includes: the storage unit 12, which stores the map information; the position detecting unit 13, which detects the current position of the own vehicle 31 (the moving body); the controller 10, which generates the display data where the map information stored in the storage unit 12 and the current position of the moving body are superimposed; and the plurality of the backlights, wherein the navigation device includes the display unit 17, which is lit on its screen by the backlights and displays the display data generated by the controller 10, wherein the controller 10 controls the plurality of the backlights such that the luminance of the backlights that are arranged to irradiate the second region 42 that is other region than the first region 41 is lower than the luminance of the backlights that are arranged to irradiate the first region 41 corresponding to the traveling direction of the own vehicle 31 (the moving body). The navigation device thus configured can reduce power consumption.

### Second Embodiment

Next, a second embodiment of the present invention will be described. In the second embodiment, the first region 41, which corresponds to the traveling direction of the own vehicle 31 described in the first embodiment, is changed corresponding to a scale of the map information. Since the second embodiment is similar to the first embodiment other than that, the same reference numerals designate corresponding or identical elements to those of the first embodiment, and therefore repetition of description is omitted.

The user can change the scale of the map information displayed on the display unit 17 by operating the input unit 11 of the navigation device 1 illustrated in FIG. 1. In the case where the scale of the map information is changed, the controller 10 defines the first region 41 based on the scale of the map information and the traveling direction of the own vehicle 31.

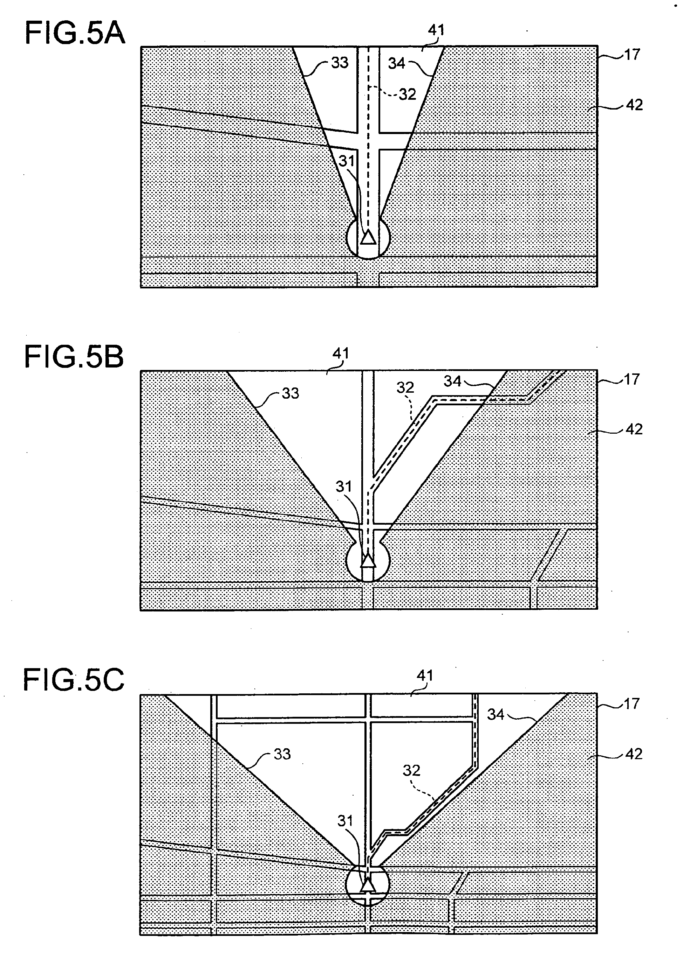

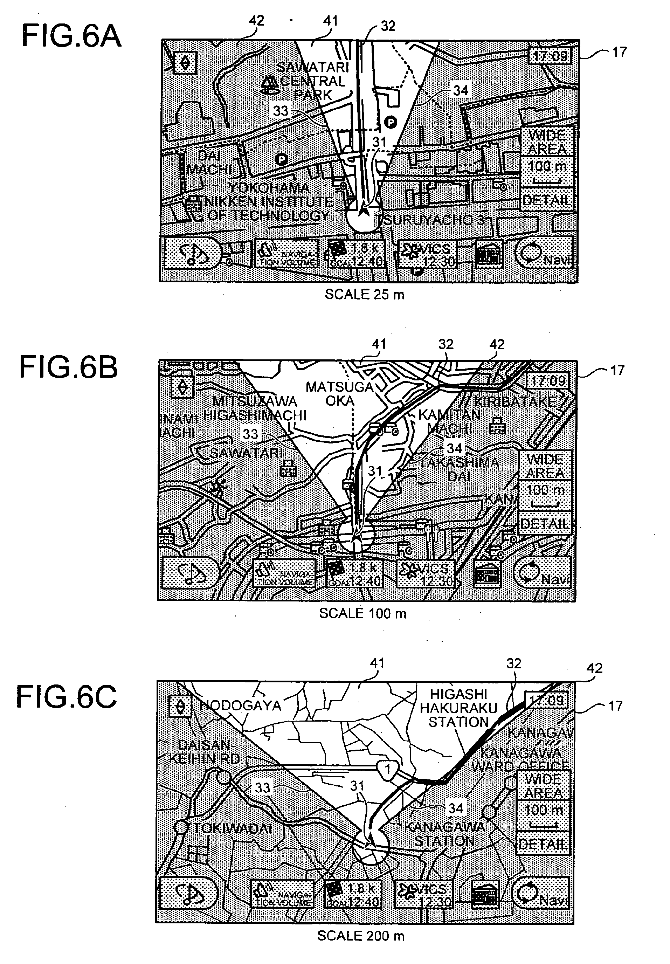

FIGS. 5A to 5C are diagrams illustrating the display screen of the navigation device according to this embodiment. The scale of the map becomes smaller in an order of FIG. 5A, FIG. 5B, and FIG. 5C (that is, the map is reduced). That is, FIG. 5A illustrates the most enlarged map (a large scale), FIG. 5C illustrates the most reduced map (a small scale), and FIG. 5B illustrates an intermediate scale map between these scales (a middle scale). Similarly, FIGS. 6A and 6B are diagrams illustrating specific display examples of the navigation device according to this embodiment. The scale of the map becomes smaller in an order of FIG. 6A, FIG. 6B, and FIG. 6C.

As illustrated in FIGS. 5A to 5C, in the navigation device according to this embodiment, the controller 10 defines the first region 41 such that the first region 41 becomes larger as the scale of the map becomes smaller. In other words, the first region 41 is defined such that an angle formed by the first line segment 33 and the second line segment 34 becomes larger as the scale of the map becomes smaller. The controller 10 defines the first region 41 such that the angle formed by the first line segment 33 and the second line segment 34 becomes smaller as the scale of the map becomes larger.

As illustrated in FIGS. 5A and 6A, the route 32 of the own vehicle 31 tends to be displayed in a smaller area as the scale of the map becomes larger. In contrast, as illustrated in FIGS. 5C and 6C, the route 32 of the own vehicle 31 tends to be displayed in a wider area as the scale of the map becomes smaller. The navigation device according to this embodiment changes the first region 41, which corresponds to the traveling direction of the own vehicle 31, depending on the display condition, which changes according to the scale of the map, of the route 32 of the own vehicle 31. Accordingly, by changing the first region 41 in accordance with the scale of the map, visibility of the display screen can be improved and power consumption of the navigation device can be efficiently reduced.

### Third Embodiment

Next, a third embodiment of the present invention will be described. In the third embodiment, the first region 41, which corresponds to the traveling direction of the own vehicle 31 described in the first embodiment, is defined to include the route 32 of the own vehicle 31. Since the third embodiment is otherwise similar to the first embodiment other than that, the same reference numerals designate corresponding or identical elements to those of the first embodiment, and therefore repetition of description is omitted.

When the user operates the input unit 11 to set the destination, the controller 10 of the navigation device 1 executes arithmetic operations of the predetermined algorithm based on the route calculation data, assuming that the current position of the own vehicle 31 is a departure point. Thus, the controller 10 executes a route search from the departure point to the destination. The route 32 obtained by this route search is set as a route to the destination. When the route is set, the controller 10 displays the route on the display unit 17 using a different color from that of other roads, so that the user can recognize the route.

Then, the controller 10 defines the first region 41 based on the set route information and the traveling direction of the own vehicle 31. That is, the controller 10 defines the first region such that the first region includes the whole route displayed on the map. At this time, the values of the angle α and the angle β illustrated in FIG. 3 may be defined such that the angle α and the angle β are different from each other.

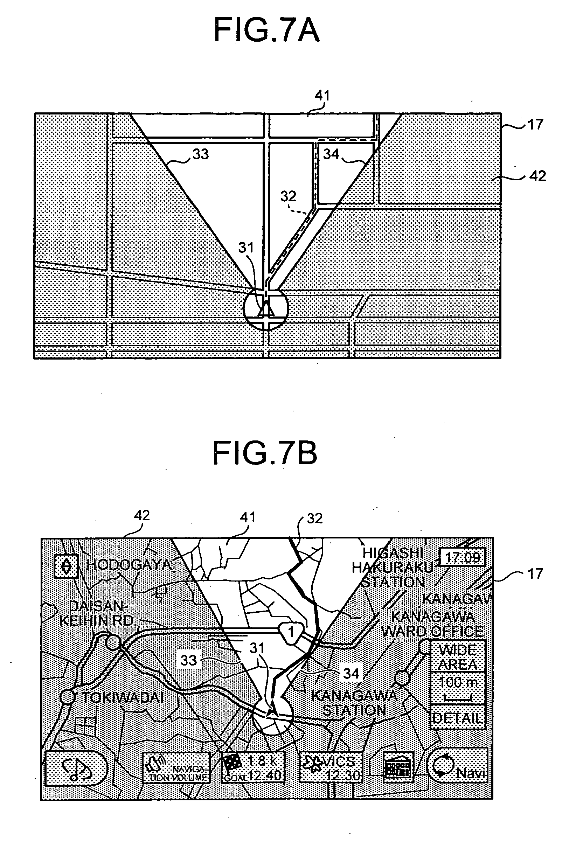

FIG. 7A is a diagram illustrating the display screen of the navigation device according to this embodiment. FIG. 7B is a diagram illustrating a specific display example of the navigation device according to this embodiment. As illustrated in FIGS. 7A and 7B, in the navigation device according to this embodiment, the controller 10 defines the first region 41 corresponding to the traveling direction of the own vehicle 31 such that the first region 41 includes the route 32 of the own vehicle 31. In other words, the controller 10 defines the angle α and the angle β illustrated in FIG. 3 such that the first line segment 33 and the second line segment 34 do not cross the route 32 of the own vehicle 31. Accordingly, since the whole route can be displayed in the first region 41, visibility of the display screen in the navigation device is improved.

FIGS. 8A and 8B are diagrams illustrating other examples of display screens of the navigation device according to this embodiment. As illustrated in FIG. 8A, in the case where the route 32 displayed on the display unit 17 extends in a large area (that is, in the case where the route 32 extends in the lateral direction of the screen), visibility of the display screen can be improved by expanding an area of the first region 41 (which corresponds to a sum of the angle α and the angle β) In contrast, as illustrated in FIG. 8B, in the case where the route 32 displayed on the display unit 17 extends in a small area, power consumption of the navigation device can be reduced by narrowing the first region 41. Accordingly, by changing the area of the first region 41 according to the route 32 displayed on the display screen of the navigation device, visibility of the display screen of the navigation device can be improved, and also power consumption can be effectively reduced.

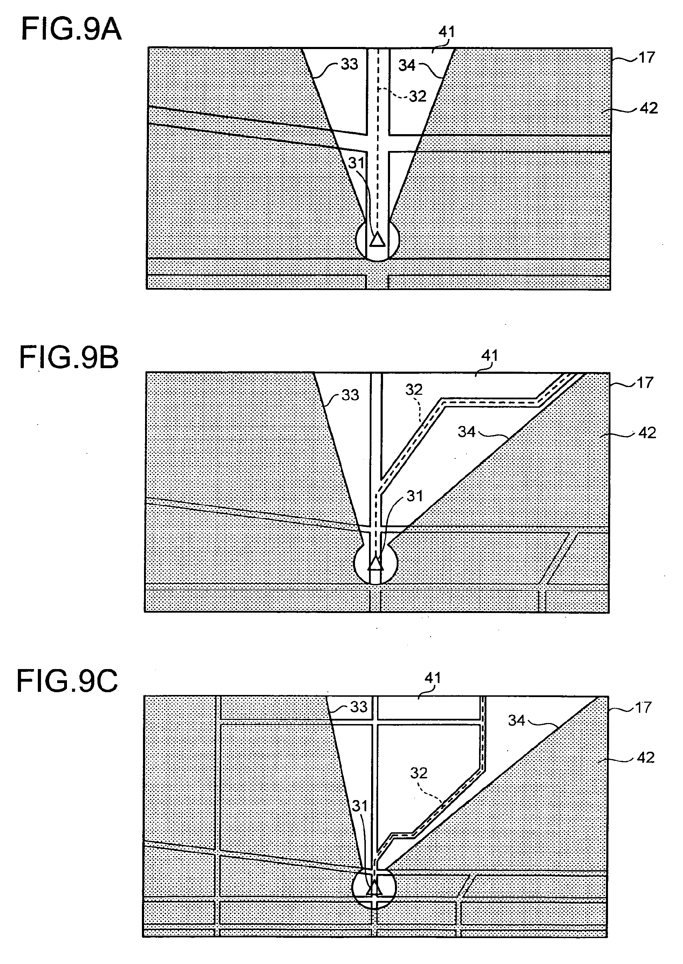

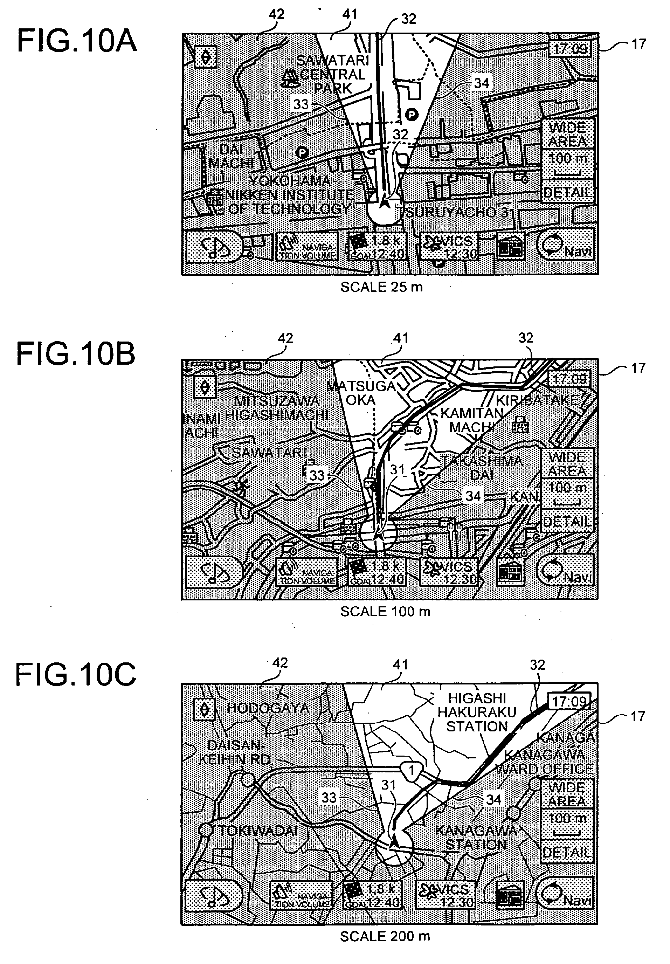

This embodiment may also be applicable to the navigation device according to the second embodiment. That is, when changing the first region 41 according to the scale of the map information, the first region 41 may be defined to include the route 32 of the own vehicle 31. FIGS. 9A to 9C are diagrams illustrating the display screen of the navigation device according to this embodiment. The scale of the map becomes smaller in an order of FIG. 9A, FIG. 9B, and FIG. 9C. That is, FIG. 9A illustrates the most enlarged map (a large scale), FIG. 9C illustrates the most reduced map (a small scale), and FIG. 9B illustrates an intermediate scale map between these scales (a middle scale). Similarly, FIGS. 10A to 10C are diagrams illustrating specific display examples of the navigation device according to this embodiment. The scale of the map becomes smaller in an order of FIG. 10A, FIG. 10B, and FIG. 10C.

As illustrated in FIGS. 9A to 9C and 10A to 10C, in the navigation device according to this embodiment, the controller 10 defines the first region 41 such that the first region 41 becomes larger as the scale of the map becomes smaller. In other words, the first region 41 is defined such that the angle formed by the first line segment 33 and the second line segment 34 becomes larger as the scale of the map becomes smaller. The controller 10 defines the first region 41 such that the angle formed by the first line segment 33 and the second line segment 34 becomes smaller as the scale of the map becomes larger. Furthermore, in the navigation device according to this embodiment, the controller 10 defines the first region 41 such that the first region 41 include the whole route 32 displayed on the map.

For example, in the example illustrated in FIG. 5B, since the route 32 partially overlaps with the second region 42, visibility of the display screen deteriorates. However, in the case of this embodiment illustrated in FIG. 9B, the whole route 32 can be displayed in the first region 41. Thus, the navigation device according to this embodiment improves visibility of its display screen.

### Fourth Embodiment

Next, a fourth embodiment of the present invention will be described. In the fourth embodiment, a map to be displayed on the display screen is a north-up map where the north direction of the map is fixedly oriented to the upper direction of the display screen. Since the fourth embodiment is similar to the first to third embodiments other than that, the same reference numerals designate corresponding or identical elements to those of the first to third embodiments, and therefore repetition of description is omitted herein.

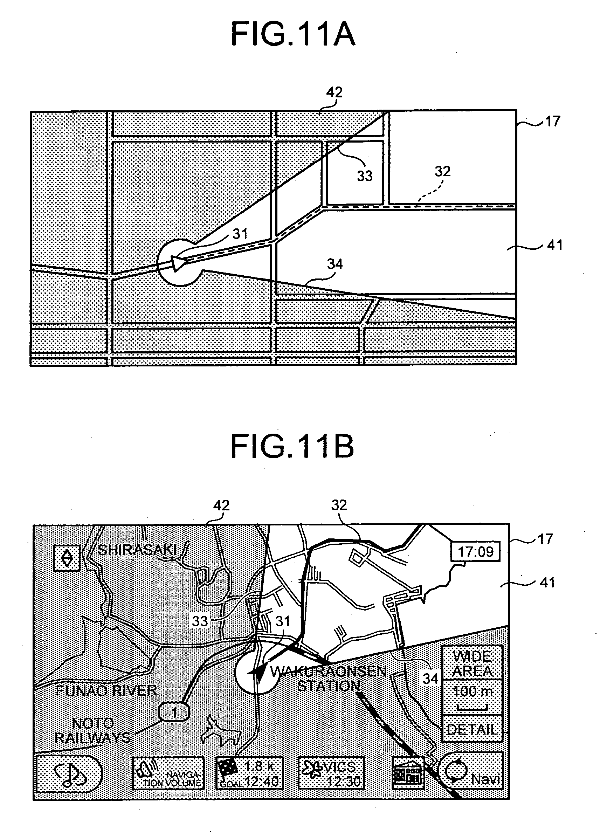

As illustrated in FIGS. 11A and 11B, in the case where the map to be displayed on the display screen is displayed as a north-up map, the own vehicle 31 moves in directions other than the upper direction on the map. In this case, similarly to other embodiments, the backlights are controlled such that the luminance of the backlights that are arranged to irradiate the second region 42 that is the region other than the first region 41 are lower than the luminance of the backlights that are arranged to irradiate the first region 41 corresponding to the traveling direction of the own vehicle 31. Accordingly, even in the case where the map is displayed as the north-up map, this allows the backlights to dimly irradiate the second region 42, which corresponds to the region other than the traveling direction of the own vehicle 31 and is less important. Thus, power consumption of the navigation device can be reduced.

Particularly, in the case where the map is displayed as the north-up map, the own vehicle 31 moves in directions other than the upper direction on the map. Thus, there has been a need for the user to look carefully at the display screen to confirm the direction of the own vehicle 31. However, the user can instantly recognize the traveling direction of the own vehicle 31 even in the case of the north-up map by making the luminance of the first region 41 corresponding to the traveling direction of the own vehicle 31 bright, as in the navigation device according to this embodiment.

### Fifth Embodiment

Next, a fifth embodiment of the present invention will be described. In the fifth embodiment, a case where a single road without a branch such as a mountain road and a highway runs in the map will be described. Basic configuration of the navigation device according to this embodiment is similar to that of the first embodiment. Therefore, the same reference numerals designate corresponding or identical elements to those of the first embodiment and repetition of description is omitted.

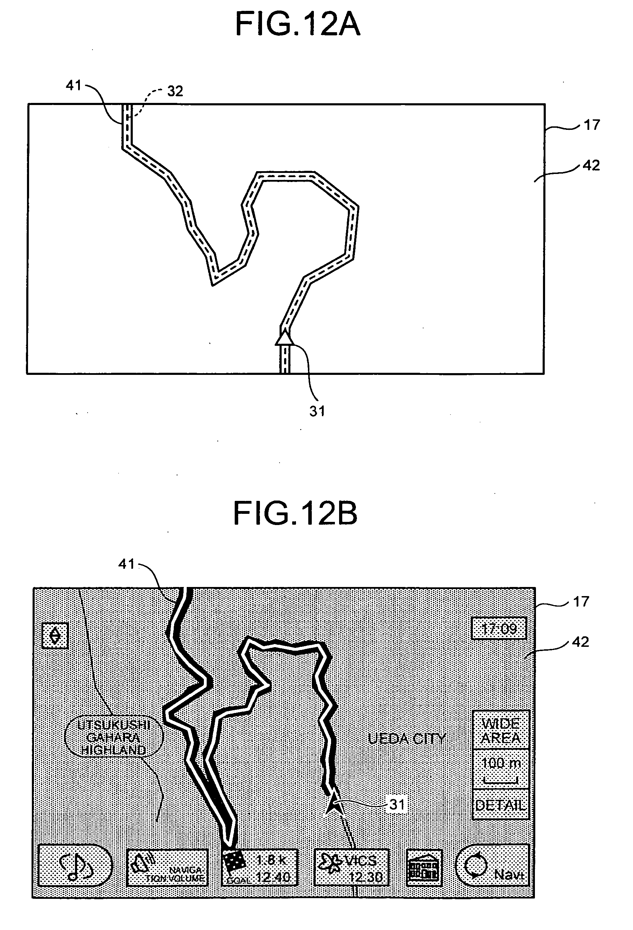

As illustrated in FIGS. 12A and 12B, in a road that consists mainly of many single roads, such as a mountain road and a highway, the first region 41 corresponding to the traveling direction of the own vehicle 31 is assumed to be a road (a single road) running in the traveling direction of the own vehicle 31. In this case, the backlight controller 16 controls the backlights such that luminance of the backlights that are arranged to irradiate a position not corresponding to the single road are lower than luminance of the backlights that are arranged to irradiate a position corresponding to the single road in the traveling direction of the own vehicle 31.

In view of this, in the road with many single roads such as a mountain road and a highway, the backlights that are disposed corresponding to the road at the position in the traveling direction of the own vehicle 31 are lighted with high luminance. This reduces power consumption of the navigation device and improves visibility of the display screen of the navigation device.

### Sixth Embodiment

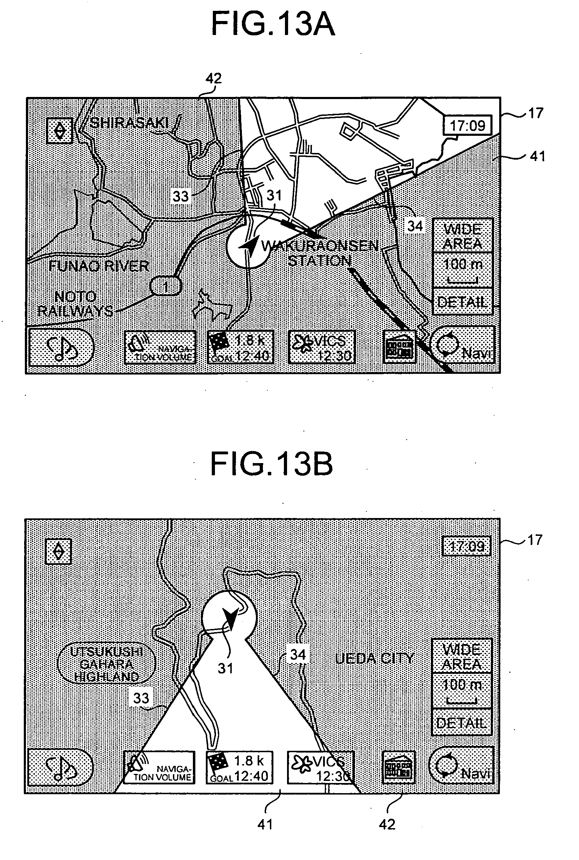

FIG. 13A is a diagram illustrating an example of the display screen in the case where a map is displayed as a north-up map during normal running. FIG. 13B is a diagram illustrating an example of the display screen in the case where a north-up map is used and a single road runs during normal running.

As illustrated in FIGS. 13A and 13B, in the case where the map is displayed as the north-up map, the own vehicle 31 moves in directions other than the upper direction on the map. Thus, there has been a need for the user to look carefully at the display screen to confirm the direction of the own vehicle 31 during normal running. However, as illustrated in FIGS. 13A and 13B, by making the luminance of the first region 41 corresponding to the traveling direction of the own vehicle 31 bright during normal running, the user can quickly recognize the traveling direction of the own vehicle 31 during normal running.

Even in the case of the display where the own vehicle 31 is always directed to the upper direction as described in the first embodiment, the luminance of the first region 41 corresponding to the traveling direction of the own vehicle during normal running may be made to be bright. However, in the case where the map is displayed as the north-up map, displaying as illustrated in FIGS. 13A and 13B especially improves visibility of the display screen in the navigation device.

In the above description, the present invention has been described based on the above-described embodiments. However, the present invention is not limited to the configurations of the embodiments. Obviously, numerous modifications, revisions and combinations by those skilled in the art are included within the scope of the invention of the appended claims.

### Industrial Applicability

The present invention relates to a navigation device. In particular, the present invention can be used for a navigation device that includes a display unit with backlights.

### Reference Signs List

- 1: NAVIGATION DEVICE
- 10: CONTROLLER
- 11: INPUT UNIT
- 12: STORAGE UNIT
- 13: POSITION DETECTING UNIT
- 14: VEHICLE SIGNAL INPUT UNIT
- 15: DRAWING UNIT
- 16: BACKLIGHT CONTROLLER
- 17: DISPLAY UNIT (DISPLAY SCREEN)
- 18: LIQUID CRYSTAL PANEL
- 19: BACKLIGHT PANEL
- 21, 22, and 23: LIQUID CRYSTAL CELL
- 25, 26, 27, and 28: BACKLIGHT
- 31: OWN VEHICLE (MOVING BODY)
- 32: ROUTE
- 33: FIRST LINE SEGMENT
- 34: SECOND LINE SEGMENT
- 41: FIRST REGION
- 42: SECOND REGION

## Claims

1. A navigation device comprising:
a storage unit configured to store map information;
a position detecting unit configured to detect a position of a moving body;
a controller configured to generate drawing data, the map information stored in the storage unit and the position of the moving body being superimposed in the drawing data; and
a display unit configured to display the drawing data on a screen, the display unit including a plurality of backlights, the backlights irradiating the screen, the drawing data being generated by the controller, wherein
the controller is configured to control the plurality of the backlights such that luminance of a backlight that is arranged to irradiate a second region is lower than luminance of a backlight that is arranged to irradiate a first region, the first region corresponding to a traveling direction of the moving body, the second region being a region other than the first region.

2. The navigation device according to claim 1, wherein
the display unit includes a liquid crystal panel, and
the controller is configured to control the liquid crystal panel such that transmittance of the liquid crystal panel in the first region is higher than transmittance of the liquid crystal panel in the second region.

3. The navigation device according to claim 1, wherein
the first region is configured to change according to a scale of the map information displayed on the display unit.

4. The navigation device according to claim 1, wherein
the first region is a region that is surrounded by a first line segment and a second line segment, the first line segment forming a first angle with the traveling direction of the moving body, the second line segment forming a second angle with the traveling direction of the moving body.

5. The navigation device according to claim 4, wherein
the controller is configured to:
make an angle formed by the first line segment and the second line segment smaller as a scale of a map to be displayed on the display unit becomes larger; and
make the angle formed by the first line segment and the second line segment larger as a scale of a map to be displayed on the display unit becomes smaller.

6. The navigation device according to claim 4, wherein
the first angle and the second angle are mutually different from each other.

7. The navigation device according to claim 1, wherein
the first region is defined to include a searched route of the moving body.

8. The navigation device according to claim 1, wherein
the controller is configured to control the plurality of the backlights such that luminance of a backlight that is arranged to irradiate a position not corresponding to a single road is lower than luminance of a backlight that is arranged to irradiate a position corresponding to the single road, in a case where the single road is displayed on the display unit, the single road having no branch road within a displayed map.

9. The navigation device according to claim 1, wherein
the controller is configured to generate the drawing data such that a north direction of the map information is fixedly oriented to an upper direction on the display unit.

10. The navigation device according to claim 1, wherein
the controller is configured to control the backlights such that luminance of a backlight that is arranged to irradiate a region corresponding to the moving body is higher than luminance of a backlight that is arranged to irradiate the second region.
